# EUROPÄISCHE PATENTSCHRIFT

(11) **EP 3 019 347 B1**
(45) Veröffentlichungstag und Bekanntmachung des Hinweises auf die Patenterteilung: **10.07.2019**
(21) Anmeldenummer: 14723822.4
(22) Anmeldetag: 15.05.2014
(51) Int. Cl.: B60C 11/04, B60C 11/13, B60C 11/03

(54) **LAUFSTREIFENPROFIL EINES FAHRZEUGLUFTREIFENS**
TREAD PATTERN OF A PNEUMATIC VEHICLE TIRE
BANDE DE ROULEMENT D'UN PNEU DE VÉHICULE

(30) Priorität: 11.07.2013 DE 102013107343
(43) Veröffentlichungstag der Anmeldung: 18.05.2016
(73) Patentinhaber: Continental Reifen Deutschland GmbH, 30165 Hannover (DE)
(72) Erfinder: FRIES, Volkmar, 30900 Wedemark (DE)
(74) Vertreter: Finger, Karsten
(86) Internationale Anmeldenummer: PCT/EP2014/059906
(87) Internationale Veröffentlichungsnummer: WO 2015/003837

(56) Entgegenhaltungen:
- DE-A1-102007 016 930
- US-A- 2 843 172
- US-A1- 2009 301 622

## Beschreibung

Die Erfindung betrifft ein Laufstreifenprofil eines Fahrzeugluftreifens - insbesondere für Nutzfahrzeuge - mit durch eine Umfangsrille axial von einander beabstandeten Profilbändern, die in radialer Richtung R nach außen hin durch eine radial äußere, die Bodenkontaktoberfläche bildenden Oberfläche begrenzt sind, wobei die Umfangsrille längs ihrer Erstreckung in Umfangsrichtung U mit einer Tiefe t ausgebildet und jeweils in radialer Richtung R nach innen hin durch einen Rillengrund und axial beiderseits des Rillengrundes jeweils durch eine Rillenwand begrenzt ist, welche sich ausgehend vom Rillengrund in radialer Richtung nach außen bis zu der radial äußeren Oberfläche des durch die Rillenwand begrenzten Profilbandes erstreckt, wobei die beiden Rillenwände in der radial äußeren Oberfläche parallel zu einander - insbesondere geradlinig - in Umfangsrichtung erstreckt ausgerichtet sind, wobei der Rillengrund der Umfangsrille längs seiner Erstreckung in Umfangsrichtung wellenförmig mit einer Wellenlänge L₁ erstreckt verlaufend ausgebildet ist, wobei die beiden Rillenwände längs ihrer Erstreckung in Umfangsrichtung jeweils in den Schnittebenen die die Reifenachse beinhalten ausgehend von der radial äußeren Oberfläche nach radial innen hin in Richtung zum Rillengrund im Wesentlichen eine geradlinige Schnittkontur aufweisen.

Derartige Nutzfahrzeugreifen sind bekannt. Die Gestaltung der Profilgeometrie beeinflusst verschiedene Eigenschaften des Reifens. Bei Nutzfahrzeugreifen sind die Profilelemente häufig in Form von umlaufenden Profilbändern (Umfangsrippen oder Profilblockreihen) ausgebildet, die entsprechend durch umlaufende Rillen geometrisch voneinander getrennt sind. Die in axialer Richtung A des Reifens am weitesten außen gelegenen Umfangsrillen, welche an die Schulterprofilbänder angrenzen, werden als Schulterrillen bezeichnet.

Gerade für die Schulterrillen stellt die Vermeidung von Rissbildung im Rillengrund aufgrund der gerade in diesem Profilabschnitt besonderen auf den Rillengrund einwirkenden Belastungen eine für die Auslegung besondere, zusätzliche Anforderung dar. Um eine Rillengeometrie der Umfangsrille zur Vermeidung von Rissbildung zu optimieren, sind besondere geometrische Auslegungen förderlich, die jedoch zum Teil wieder im Zielkonflikt zu anderen durch die Umfangsrille beeinflussenden Eigenschaften stehen. Dabei ist insbesondere der Zielkonflikt zwischen Widerstand gegen Rissbildung im Rillengrund ("Groove-Cracks") sowie der Zielkonflikt zwischen gutem Rollwiderstand und guter Abriebsrate einerseits und das Aufsammeln und Auswerfen von Fremdkörpern in der Rille (Steine fangen) andererseits von Bedeutung.

Die bisher bekannten Rillengeometrien weisen in ihrem Eigenschaftsprofil bezüglich dieser Zielkonflikte noch Defizite auf. So ist es wünschenswert zur Erzielung eines gleichmäßigen Abriebsbildes und eines geringen Rollwiderstands die Umfangsrillen in ihrem radial äußeren Erstreckungsbereich möglichst geradlinig auszubilden. Zur Erzielung guter Steinauswurfeigenschaften ist es wünschenswert die Umfangsrillen im Rillengrund wellenförmig auszubilden.

Es ist auch bekannt, zur weiteren Verbesserung des Widerstands gegen Rissbildung gerade in den kritischen Schulterumfangsrillen den Rillengrund in denjenigen Schnittebenen, welche die Reifenachse beinhalten, mit einem mittleren geradlinig erstreckten Erstreckungsabschnitt auszubilden, welcher in Richtung zur nächst gelegenen Reifenschulter hin stetig ansteigt, und zusätzlich beiderseits dieses Rillengrundes jeweils einen gekrümmten Übergangsabschnitt zur die Umfangsrille begrenzenden Rillenwand auszubilden. Der Übergangsabschnitt, welcher den Übergang des mittleren Erstreckungsabschnitts zu der zur Reifen nächst gelegenen Reifenschulter hinweisenden Rillenwand bildet, ist dabei mit größerem Krümmungsradius als der andere Übergangsabschnitt ausgebildet ist. Es hat sich herausgestellt, dass eine derartige geometrische Optimierung der Rissbildung am Rillengrund deutlich entgegenwirken kann bei guter Abriebrate und gutem Rollwiderstand.

Allerdings sind die in dieser Weise bekannten Rillen hinsichtlich ihren Steinaufnahme- und -auswurfmöglichkeiten beschränkt.

Gelegentlich ist vorgeschlagen worden, in den Rillenwänden von Umfangsrillen von Nutzfahrzeugreifen pyramidenartige Strukturen auszubilden, welche sich bis in den Rillengrund hinein erstrecken und dort enden. Diese Ausbildungen ermöglichen zwar - je nach Ausbildung - mehr oder weniger guten Schutz gegen das Eindringen von Steinen und ermöglichen mehr oder weniger gut auch das Auswerfen von Steinen aus dem Profil. Allerdings ermöglichen die bekannten Strukturen im Bereich des Rillengrundes zusätzliche Rissbildung im Übergang zum Rillengrund.

Gerade bei sehr breiten Rillen, bei denen zur Aufnahme und zur Ableitung von Wasser gezielt eine große Rillenbreite ausgebildet wird, bestehen besondere Probleme hinsichtlich des Rollwiderstandes und des Abriebs.

**Aus der** DE 10 2007 016 030 A1 **ist eine Ausbildung von pyramidenförmigen oder kegelförmigen Strukturen in Rillenwänden von Umfangsrillen bekannt.**

**Aus der** US 2,843,172 **ist es bekannt, die Umfangsrille eines Fahrzeugreifens in der radial äußeren, die Bodenkontaktoberfläche bildenden Oberfläche längs ihrer Umfangserstreckung zickzackförmig und im Rillengrund geradlinig erstreckt auszubilden.**

Der Erfindung liegt die Aufgabe zugrunde, derartige Laufstreifenprofile mit gutem Steinauswurfverhalten bei hohem Widerstand gegen Rissbildung im Rillengrund (Groove-Cracks) sowie bei gutem Rollwiderstand und gutem Abriebverhalten zu ermöglichen.

Die Aufgabe wird erfindungsgemäß durch die Ausbildung eines Laufstreifenprofils eines Fahrzeugluftreifens - insbesondere für Nutzfahrzeuge - mit durch eine Umfangsrille axial von einander beabstandeten Profilbändern, die in radialer Richtung R nach außen hin durch eine radial äußere, die Bodenkontaktoberfläche bildenden Oberfläche begrenzt sind, wobei die Umfangsrille längs ihrer Erstreckung in Umfangsrichtung U mit einer Tiefe t ausgebildet und jeweils in radialer Richtung R nach innen hin durch einen Rillengrund und axial beiderseits des Rillengrundes jeweils durch eine Rillenwand begrenzt ist, welche sich ausgehend vom Rillengrund in radialer Richtung nach außen bis zu der radial äußeren Oberfläche des durch die Rillenwand begrenzten Profilbandes erstreckt, wobei die beiden Rillenwände in der radial äußeren Oberfläche parallel zu einander, geradlinig in Umfangsrichtung erstreckt ausgerichtet sind, wobei der Rillengrund der Umfangsrille längs seiner Erstreckung in Umfangsrichtung wellenförmig mit einer Wellenlänge L₁ erstreckt verlaufend ausgebildet ist, wobei die beiden Rillenwände längs ihrer Erstreckung in Umfangsrichtung jeweils in den Schnittebenen die die Reifenachse beinhalten ausgehend von der radial äußeren Oberfläche nach radial innen hin in Richtung zum Rillengrund im Wesentlichen eine geradlinige Schnittkontur aufweisen, gemäß den Merkmalen von Anspruch 1 gelöst, bei dem im Erstreckungsbereich der von einer der beiden Rillenwände jeweils wegweisend ausgebildeten Wellenberge des Wellenförmigen Verlaufes diese Rillenwand zusätzlich mit einem kegelschnittförmigen, in die Rille hinein erstreckten Vorsprung ausgebildet ist, wobei die Kegelspitze S auf der Rillenwand - insbesondere in der radial äußeren Oberfläche - angeordnet ist und die die Kegelachse in der die Reifenachse und die Kegelspitze S beinhaltenden Schnittebene liegt und unter einem Neigungswinkel δ mit δ ≤ 30° zur Radialen Richtung R ausgerichtet ist, und wobei sich der kegelförmige Vorsprung bis in einen radialen Abstand h mit h < t von der radial äußeren Oberfläche erstreckt und dort endet.

Durch diese Ausbildung wird es ermöglicht, dass die bekannten Vorteile einer Umfangsrille mit geradlinig erstrecktem, radial äußeren Erstreckungsabschnitt bei in den Schnittebenen, welche die Reifenachse beinhalten, im Wesentlichen geradlinig erstreckten Rillenwänden längs der gesamten Erstreckung der Umfangsrille und wellenförmig erstrecktem Rillengrund in vollem Umfang umgesetzt werden können. Die damit verbundenen Vorteile des guten Abriebverhaltens, des bereits reduzierten Rollwiderstandes, der guten Wasserableitung (Aufnahme und Ableitung) sowie der bereits reduzierten Rissbildungsgefahr im Rillengrund können somit genutzt werden. Durch die kegelstumpfartigen Vorsprünge, welche sich bis in den Abstand H von der radial äußeren Oberfläche erstrecken, und dabei in die Rille hinein ragen kann dabei dennoch ein gutes Steinaufnahme- und -auswurfverhalten umgesetzt werden. Zusätzlich ermöglicht diese Ausbildung, dass der wellenförmigförmig erstreckte Rillengrund radial unterhalb des kegelstumpfförmigen Vorsprungs zur Erzielung weiterer Verbesserung der gewünschten Eigenschaften - wie beispielsweise der Verbesserung des Widerstandes gegen Rissbildung im Rillengrund sowie der Verbesserung der Abrieb- und Rollwiderstandseigenschaften - individuell, entsprechend der jeweiligen Erfordernissen optimiert ausgebildet werden kann. Besonders vorteilhaft ist die Ausbildung eines Fahrzeugreifens gemäß den Merkmalen von Anspruch 2, wobei der kegelschnittförmige Vorsprung im radialen Abstand h von der radial äußeren Oberfläche mit einer in Umfangsrichtung U gemessene Erstreckungslänge L₂ mit (0,4 L₁)≤ L₂≤(0,6 L₁) erstreckt ausgebildet ist. Hierdurch kann er Steinauswurf weiter optimiert werden.

Besonders vorteilhaft ist die Ausbildung eines Fahrzeugreifens gemäß den Merkmalen von Anspruch 3, wobei der kegelschnittförmige Vorsprung in der Position im radialen Abstand h von der radial äußeren Oberfläche bis in einen maximalen, in axialer Richtung A gemessenen Abstand c von der Position der Rillenwand am Rillengrund in die Rille hinein erstreckt ausgebildet ist mit 0,5mm ≤c≤2,5mm. Hierdurch kann er Steinauswurf weiter optimiert werden.

Besonders vorteilhaft ist die Ausbildung eines Fahrzeugreifens gemäß den Merkmalen von Anspruch 4, wobei der kegelschnittförmige Vorsprung in der Position im radialen Abstand h von der radial äußeren Oberfläche bis in einen maximalen, in axialer Richtung A gemessenen Abstand c von der Position der Rillenwand am Rillengrund in die Rille hinein erstreckt ausgebildet ist mit 0,1b ≤c≤0,4b, wobei b die in axialer Richtung A in der Position der Maxima der Wellenform des Wellenverlaufes gemessene Breite ist. Hierdurch kann er Steinauswurf weiter optimiert werden.

Besonders vorteilhaft ist die Ausbildung eines Fahrzeugreifens gemäß den Merkmalen von Anspruch 5, wobei der Abstand h mit (t-2mm)≥ h≥ (t-4mm) ausgebildet ist.

Besonders vorteilhaft ist die Ausbildung eines Fahrzeugreifens gemäß den Merkmalen von Anspruch 6, wobei der in den die Reifenachse aufweisenden Querschnittebenen der Rillengrund aus einem mittleren geradlinig erstreckten Erstreckungsabschnitt der in axialer Richtung A gemessenen Erstreckungslänge a und aus einem ersten, mit Krümmungsradius rₐ nach radial außen hin gekrümmt ausgebildeten Übergangsabschnitt zum Übergang zwischen geradlinig erstrecktem Erstreckungsabschnitt und der zur nächstgelegenen Reifenschulter hin ausgebildeten Rillenwand und aus einem zweiten, mit Krümmungsradius rᵢ nach radial außen hin gekrümmt Übergangsabschnitt zum Übergang zwischen geradlinig erstrecktem Erstreckungsabschnitt und der anderen Rillenwand ausgebildet ist, wobei die Breite b der Rille im Rillengrund mit b=(a+ rᵢ + rₐ) ausgebildet ist. Hierdurch kann der Widerstand gegen Rissbildung im Rillengrund weiter verbessert werden.

Besonders vorteilhaft ist die Ausbildung eines Fahrzeugreifens gemäß den Merkmalen von Anspruch 7, wobei rₐ und rᵢ mit rₐ > rᵢ ausgebildet sind, wobei insbesondere rₐ und rᵢ mit 2mm ≤rₐ ≤4mm und mit rᵢ =1mm ausgebildet sind. Hierdurch kann der Widerstand gegen Rissbildung im Rillengrund weiter verbessert werden.

Besonders vorteilhaft ist die Ausbildung eines Fahrzeugreifens gemäß den Merkmalen von Anspruch 8, wobei a mit 1mm≤a≤4mm ausgebildet ist. Hierdurch kann der Widerstand gegen Rissbildung im Rillengrund weiter verbessert werden.

Besonders vorteilhaft ist die Ausbildung eines Fahrzeugreifens gemäß den Merkmalen von Anspruch 9, wobei der geradlinige Erstreckungsabschnitt des Rillengrundes in den die Reifenachse aufweisenden Querschnittebenen in axialer Richtung A ausgehend vom zweiten Übergangsabschnitt bis zum ersten Übergangsabschnitt unter Einschluss eines Neigungswinkels α > 0° - insbesondere mit 3° ≤ α ≤ 20° - zur axialen Richtung A radial ansteigend ausgebildet ist. Hierdurch kann der Widerstand gegen Rissbildung im Rillengrund weiter verbessert werden

Die Erfindung wird im Folgenden an Hand der in den Figuren 1 bis 3 dargestellten Ausführungsbeispiele näher erläutert. Hierin zeigen
- Fig.1: einen Laufstreifenprofilabschnitt eines Fahrzeugreifens für Nutzfahrzeuge mit Umfangsrille in Draufsicht,
- Fig.2: das Laufstreifenprofil von Fig.1 in Schnittdarstellung gemäß Schnitt II-II von Fig.1 und
- Fig.3: das Laufstreifenprofil von Fig.1 in Schnittdarstellung gemäß Schnitt III-III von Fig.1.

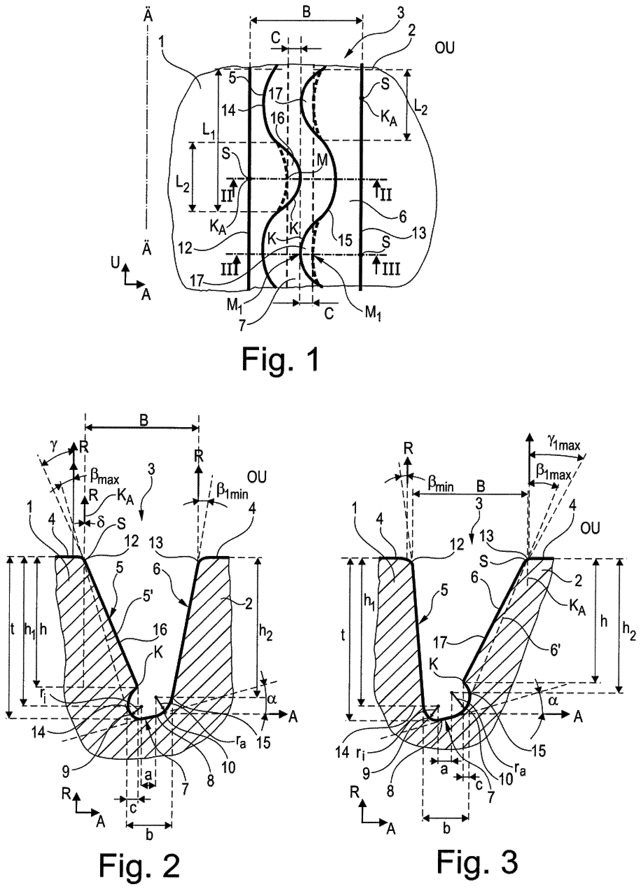

Die Figuren 1 bis 3 zeigen einen Abschnitt eines Laufstreifenprofils für Nutzfahrzeugreifen bekannter Art mit zwei in axialer Richtung A des Fahrzeugluftreifens nebeneinander angeordneten und über den gesamten Umfang des Fahrzeugluftreifens erstreckten Umfangsrippen 1 und 2 bekannter Art, welche durch eine in axialer Richtung zwischen den beiden Umfangsrippen 1 und 2 angeordnete und über den gesamten Umfang des Fahrzeugluftreifens erstreckte und in Umfangsrichtung U ausgerichtete Umfangsrille 3 axial voneinander beabstandet sind. Die Profilrippen 1 und 2 sind in radialer Richtung R des Fahrzeugluftreifens nach außen hin durch eine, die Straßenkontaktoberfläche bildende radial äußere Oberfläche 4 begrenzt. Die Umfangsrille 3 ist in radialer Richtung R nach innen hin durch eine über den gesamten Umfang des Fahrzeugluftreifens erstreckten Rillengrund 7 begrenzt. Die Umfangsrille 3 ist zur Umfangsrippe 1 hin in axialer Richtung A durch eine die zur Umfangsrille 3 hinweisende Flanke der Umfangsrippe 1 bildende Rillenwand 5 begrenzt, welche sich ausgehend von der radial äußeren Oberfläche 4 in radialer Richtung R nach innen hin bis zum Rillengrund 7 erstreckt. Die Umfangsrille 3 ist zur Umfangsrippe 2 hin in axialer Richtung A durch eine die zur Umfangsrille 3 hinweisende Flanke der Umfangsrippe 2 bildende Rillenwand 6 begrenzt, welche sich ausgehend von der radial äußeren Oberfläche 4 der Umfangsrippe 2 in radialer Richtung R nach innen bis zum Rillengrund 7 erstreckt.

Ausgehend von der Umfangsrille 3 ist die Umfangsrippe 2 in axialer Richtung A zur nächstgelegenen Reifenschulter OU hin und die Umfangsrippe 1 zur Äquatorebene Ä-Ä des Reifens hin angeordnet.

Der Rillengrund 7 ist in den Schnittebenen des Reifens, welche die Reifenachse beinhalten, aus einem mittleren Erstreckungsabschnitt 8 der in axialer Richtung A gemessenen Erstreckungsbreite a, in axialer Verlängerung des mittleren Erstreckungsabschnitts 8 zur Rillenwand 5 hin mit einem Übergangserstreckungsabschnitt 9 und in axialer Verlängerung zur Rillenwand 6 hin mit einem Übergangserstreckungsabschnitt 10 ausgebildet. Im mittleren Erstreckungsabschnitt 8 ist der Rillengrund 7 in den Schnittebenen, welche die Reifenachsen beinhalten, geradlinig erstreckt und ausgehend vom Übergangserstreckungsabschnitt 9 bis zum Übergangserstreckungsabschnitt 10 in radialer Richtung R unter Einschluss eines Neigungswinkels α zur axialen Richtung A kontinuierlich ansteigend ausgebildet. Der Übergangserstreckungsabschnitt 9 ist in den Schnittebenen, welche die Reifenachse beinhalten, nach radial außen um einen oberhalb des Rillengrundes ausgebildeten Krümmungsmittelpunkt mit einem Krümmungsradius rᵢ gekrümmt und mit tangentialem Übergang zum mittleren Erstreckungsabschnitt 8 ausgebildet und erstreckt sich ausgehend vom mittleren Erstreckungsabschnitt 8 bis in den in axialer Richtung A gemessenen Abstand rᵢ vom mittleren Erstreckungsabschnitt 8. Der Übergangserstreckungsabschnitt 10 ist in den Schnittebenen, welche die Reifenachse beinhalten, um einen oberhalb des Rillengrundes 7 ausgebildeten Krümmungsmittelpunkt mit einem Krümmungsradius rₐ nach außen hin gekrümmt und mit tangentialem Übergang zum mittleren Erstreckungsabschnitt 8 ausgebildet und erstreckt sich ausgehend vom mittleren Erstreckungsabschnitt 8 bis in den in axialer Richtung A gemessenen Abstand rₐ vom mittleren Erstreckungsabschnitt 8. Die Breite b des Rillengrundes 7 ist in den Schnittebenen, welche die Reifenachse aufweisen, mit b = (a + rᵢ + rₐ) ausgebildet. Der Neigungswinkel α ist mit 3° ≤ α ≤ 20° beispielsweise mit α = 10° ausgebildet.

Der Rillengrund 7 erstreckt sich somit zwischen der in Umfangsrichtung U ausgerichteten Erstreckungslinie 14, welche den Übergangserstreckungsabschnitt 9 nach axial außen hin begrenzt, und der im axialen Abstand b von der Erstreckungslinie 14 angeordneten und in Umfangsrichtung U ausgerichteten Erstreckungslinie 15, welche den Übergangserstreckungsabschnitt 10 in axialer Richtung A nach außen hin begrenzt.

Die Rillenwand 5 erstreckt sich ausgehend von der Erstreckungslinie 14 nach radial außen bis zur radial äußeren Oberfläche 4. Die Rillenwand 5 schneidet die radial äußere Oberfläche 4 der Profilrippe 1 in einer geradlinig in Umfangsrichtung U erstreckten Schnittlinie 12. Die Rillenwand 6 erstreckt sich ausgehend von der Erstreckungslinie 15 in radialer Richtung R nach außen bis zur radial äußeren Oberfläche 4 der Profilrippe 2 und schneidet diese in einer in Umfangsrichtung U geradlinig erstreckt ausgerichteten Schnittlinie 13.

Wie in Fig.1 dargestellt ist, bildet der in axialer Richtung A in der radial äußeren Oberfläche 4 gemessene Abstand B der beiden Schnittlinien 13 und 12 die Breite der Umfangsrille 3 in der radial äußeren Oberfläche 4. Wie zu erkennen ist, ist die Umfangsrille 3 in der radial äußeren Oberfläche 4 geradlinig in Umfangsrichtung U des Fahrzeugluftreifens erstreckt ausgebildet.

Die den Rillengrund 7 begrenzenden Erstreckungslinien 14 und 15 sind in Umfangsrichtung U des Fahrzeugluftreifens wellenförmig mit einer Wellenlänge L₁ erstreckt verlaufend ausgebildet, wobei die Wellenform der beiden Erstreckungslinien 14 und 15 längs der Erstreckung in Umfangsrichtung U mit gleicher Phase ausgebildet ist. Die in axialer Richtung A des Fahrzeugluftreifens gemessene Breite b des Rillengrundes ist längs der Erstreckung des Fahrzeugluftreifens konstant.

Die Radien rᵢ und rₐ sind mit rₐ > rᵢ ausgebildet, wobei rₐ mit 2 mm ≤ rₐ ≤ 4 mm und rᵢ = 1 mm ausgebildet ist. Beispielsweise ist rₐ =3 mm ausgebildet.
Die Erstreckungslänge a des mittleren Erstreckungsbereichs ist mit 1mm≤ a ≤ 4mm beispielsweise mit a = 2,5 mm ausgebildet.

Die Umfangsrille 3 ist längs ihrer Erstreckung über den Fahrzeugluftreifen mit einer in radialer Richtung R gemessenen Tiefe t ausgebildet, welche jeweils den Abstand zwischen der radial äußeren Oberfläche 4 und dem tiefsten Punkt des Rillengrundes 7 angibt. Die Begrenzungslinie 14 ist in einem radialen Abstand h₁ von der radial äußeren Oberfläche 4 angeordnet ausgebildet. Die Begrenzungslinie 15 ist in einem radialen Abstand h₂ von der radial äußeren Oberfläche 4 der Umfangsrippe 2 angeordnet ausgebildet.

Die in den Schnittebenen, welche die Reifenachse beinhalten, ausgebildeten geradlinigen Verbindungen zwischen Schnittkante 12 und Erstreckungslinie 14 sind jeweils mit einem Neigungswinkel β zur radialen Richtung R geneigt ausgebildet, wobei der Neigungswinkel β längs der Erstreckung der Umfangsrichtung der wellenförmigen Veränderung der Linie 14 entsprechend und dem Zyklus der Wellenform folgend sich zyklisch zwischen einem minimalen Wert βₘᵢₙ und einem maximalen Wert βₘₐₓ verändert. Ebenso sind die in den Schnittebenen, welche die Reifenachse beinhalten, ausgebildeten geradlinigen Verbindungslinien der Schnittlinie 13 mit der Erstreckungslinie 15 jeweils mit einem Neigungswinkel β₁ zur Radialen R geneigt verlaufend ausgebildet, wobei der Neigungswinkel β₁ längs der Erstreckung der Umfangsrichtung der wellenförmigen Veränderung der Erstreckungslinie 15 entsprechend und dem Zyklus der Wellenform folgend sich zyklisch zwischen einem minimalen Wert β₁ₘᵢₙ und einem maximalen Wert β₁ₘₐₓ verändert.

Die Werte von β und β₁ schwanken dabei zwischen 0°≤β≤15° bzw. zwischen 0°≤β₁≤15°.

Die Rillenwand 5 ist jeweils in dem in Umfangsrichtung U gemessen Erstreckungsbereich des in die Rille 3 hineinragenden Wellenberges der Begrenzungslinie 14 mit zusätzlichem, einen kegelsegmentförmigen Vorsprung 16 bildenden Gummimaterial ausgebildet, wobei die Spitze S des Kegels jeweils in einer Schnittebene, welche die Reifenachse und den Maximalwert M des Wellenberges (die Amplitude des Wellenberges) der Erstreckungslinie 14 aufweist, und auf der Schnittlinie 12 angeordnet ist. Die Kegelachse K_{A} ist - wie in Fig.1 und Fig.2 dargestellt ist - in dieser Schnittebene durch die Kegelspitze S unter Einschluss eines Neigungswinkels δ mit δ ≤ 30° zur Radialen R verlaufend ausgebildet, wobei die Kegelachse K_{A} längs ihrer Erstreckung von radial innen nach außen hin mit von der Rille 3 weg weisender Neigungsrichtung ausgebildet ist. Im dargestellten Ausführungsbeispiel ist δ = 0° ausgebildet.

Der Vorsprung 16 erstreckt sich in radialer Richtung R ausgehend von der Spitze S nach innen hin bis in einen radialen Abstand h von der radial äußeren Oberfläche 4 der Profilrippe 1 und endet in dieser Position. In dieser Position im Abstand h von der radial äußeren Oberfläche 4 ist der Vorsprung mit einer kreissegmentförmigen Begrenzungskante K des Kegels ausgebildet. Die kreissegmentförmigen Begrenzungskante K ist mit einem kleineren Krümmungsradius ausgebildet als die Krümmung der Begrenzungslinie 14 in ihrem Maximum M. Die kreissegmentförmigen Begrenzungskante K erstreckt sich in derjenigen Umfangsposition des Reifens, in welcher Maximums M der Begrenzungslinie 14 positioniert ist, am weitesten in die Rille 3 hinein und nimmt dabei ihren maximalen Wert der von der Begrenzungslinie 14 ausgehend in axialer Richtung A nach innen in die Rille hinein gemessenen Erstreckungslänge c ein.

Die in der Position im Abstand h von der radial äußeren Oberfläche 4 ausgebildete Kreissegmentkontur des Vorsprungs 16 und somit der Vorsprung 16 erstreckt sich über eine in Umfangsrichtung U gemessene Erstreckungslänge L₂. In Figur 2 ist in der Schnittebene, welche das Maximum M der Erstreckungslinie 14 aufweist, der Verlauf der geraden Verbindungslinie zwischen der Schnittlinie 12 und der Erstreckungslinie 14 gestrichelt und mit Bezugszeichen 5' bezeichnet dargestellt und die durch den Vorsprung 16 gebildete Schnittkonturlinie, welche die Kreissegmentkontur K mit der Schnittlinie 12 geradlinig verbindet und unter einen Neigungswinkels γ zur Radialen R mit γ > βₘₐₓ einschließt.

In analoger Weise ist - wie in den Figuren 1 und 3 dargestellt ist - im Umfangserstreckungsbereich der in die Rille 3 hinein erstreckten Maxima der Erstreckungslinie 15 die Rillenwand 6 jeweils durch zusätzliches Gummimaterial zu einem in die Rille 3 eingreifenden Vorsprung 17 ausgebildet, welcher kegelsegmentartig mit Kegelspitze S und Kegelachse K_{A} ausgebildet ist. Die Kegelspitze S liegt in der Schnittebene, in welcher der Maximalwert M₁ des in die Rille 3 eingreifenden Wellenberges der Erstreckungslinie 15 und die Reifenachse liegt, auf der Schnittlinie 13. Die Kegelachse K_{A} verläuft in der Schnittebene unter Einschluss eines Neigungswinkels δ zur radialen Richtung R durch den Schnittpunkt S. Der Neigungswinkel δ ist auch hier mit δ ≤ 10° und im dargestellten Ausführungsbeispiel mit δ = 0° ausgebildet. Der kegelsegmentförmige Vorsprung 17 erstreckt sich dabei ausgehend von der Sitze S in radialer Richtung R bis in einen von der radial äußeren Oberfläche 4 im Abstand h ausgebildete Position und endet dort im Abstand h von der radial äußeren Oberfläche 4 mit einer kreissegmentförmigen Konturlinie. Die kreissegmentförmige Konturlinie erstreckt sich in dieser Schnittebene, welche durch den Maximalwert M₁ aufweist, mit dem maximalen in axialer Richtung A von der Erstreckungslinie 15 ausgehenden Maß der Erstreckung des Vorsprungs 17 bis in einen Abstand c von der Erstreckungslinie 15. Wie in Figur 3 zu erkennen ist, ist die - gestrichelt dargestellte - Verbindungslinie 6', welche die Erstreckungslinie 15 mit der Schnittlinie 13 geradlinig verbindet, in der Schnittebene, welche das Maximum M₁ aufweist, unter dem maximalen Neigungswinkel β₁ₘₐₓ zur radialen Richtung R erstreckt, verlaufend ausgebildet. Die den Vorsprung 17 begrenzende Konturlinie 6, welche den Schnittpunkt S mit der Konturlinie K in dieser Schnittebene verbindet, ist in dieser Schnittebene mit einem maximalen Neigungswinkel γ₁ₘₐₓ zur Radialen ausgebildet mit γ₁ₘₐₓ > β₁ₘₐₓ.

Auch der Vorsprung 17 erstreckt sich im Bereich seiner Kreiskonturlinie K über eine Erstreckungslänge L₂ in Umfangsrichtung.

Die Erstreckungslängen L₂ sind mit (0,4 L₁) ≤ L₂ ≤ (0,6 L₁)ausgebildet. Beispielsweise ist L₂ = (0,5 L₁) ausgebildet. Das Erstreckungsmaß c des Vorsprungs 16 bzw. 17 ist mit 0,5mm ≤ c ≤ 2,5 mm und bezogen auf die Breite b mit (0,1 b) ≤ c ≤ (0,4 b) ausgebildet. Der Abstand h ist mit (t - 2 mm) ≥ h ≥ (t - 4 mm) ausgebildet.

Wie in den Figuren 2 und 3 zu erkennen ist, ist die Rillenwand 5 in Fig.2 bzw. die Rillenwand 6 in Fig.3 radial unterhalb des radialen Erstreckungsabschnittes des Vorsprungs 16 bzw. 17 der Erstreckungshöhe h und somit radial unterhalb der jeweiligen Kreissegmentkontur K jeweils als eine von der Erstreckungslinie 14 bzw. 15 zur Konturlinie K hin ausgebildeten Verlängerung des Krümmungsabschnitts des zur Rillenwand 5 hin ausgebildeten Übergangs 9 bzw. des zur Rillenwand 6 hin ausgebildeten Übergangs 10 ausgebildet.

Die Neigungswinkel β sind mit 0° ≤ β ≤ 15° und die Neigungswinkel γ mit 10° ≤ γ ≤ 30° ausgebildet.

Wie in den Figuren 1 bis 3 deutlich zu erkennen ist, ist im gesamten radialen Erstreckungsbereich auch unterhalb des Vorsprungs 16 bzw. 17 jeweils der Rillengrund 7 mit konstanter Breite b bei wellenförmigem Konturverlauf des unteren Rillenabschnittsausgebildet. Wie in den Figuren 1, 2 und 3 zu entnehmen ist, ist trotz welligem Verlauf des Rillengrundes 17 und trotz geradlinigem Verlauf des radial äußeren Erstreckungsbereichs der Rille 3 mit Hilfe der Vorsprünge 16 und 17 durch konisch in die Rille eingreifende Vorsprünge ein Steinauswurf möglich.

Die Breiten B und b sind mit 7mm≤B≤14mm und mit 4mm≤b≤7mm ausgebildet.

### Bezugszeichenliste

- 1: Umfangsrippe
- 2: Umfangsrippe
- 3: Umfangsrille
- 4: Radial äußere Oberfläche
- 5: Rillenwand
- 6: Rillenwand
- 7: Rillengrund
- 8: Mittlerer Erstreckungsabschnitt
- 9: Übergang
- 10: Übergang
- 11: Rillengrund
- 12: Schnittkante
- 13: Schnittkante
- 14: Wellenlinie
- 15: Wellenlinie
- 16: Vorsprung
- 17: Vorsprung

## Patentansprüche

1. Laufstreifenprofil eines Fahrzeugluftreifens - insbesondere für Nutzfahrzeuge - mit durch eine Umfangsrille (3) axial von einander beabstandeten Profilbändern (1,2), die in radialer Richtung R nach außen hin durch eine radial äußere, die Bodenkontaktoberfläche bildenden Oberfläche (4) begrenzt sind, wobei die Umfangsrille (3) längs ihrer Erstreckung in Umfangsrichtung U mit einer Tiefe t ausgebildet und jeweils in radialer Richtung R nach innen hin durch einen Rillengrund (7) und axial beiderseits des Rillengrundes (7) jeweils durch eine Rillenwand (5,6) begrenzt ist, welche sich ausgehend vom Rillengrund (7) in radialer Richtung nach außen bis zu der radial äußeren Oberfläche (4) des durch die Rillenwand (5,6) begrenzten Profilbandes (1,2) erstreckt, wobei die beiden Rillenwände (5,6) in der radial äußeren Oberfläche (4) parallel zu einander - insbesondere geradlinig - in Umfangsrichtung erstreckt ausgerichtet sind, wobei der Rillengrund (7) der Umfangsrille (3) längs seiner Erstreckung in Umfangsrichtung wellenförmig mit einer Wellenlänge L₁ erstreckt verlaufend ausgebildet ist, wobei die beiden Rillenwände (5,6) längs ihrer Erstreckung in Umfangsrichtung jeweils in den Schnittebenen die die Reifenachse beinhalten ausgehend von der radial äußeren Oberfläche (4) nach radial innen hin in Richtung zum Rillengrund (7) im Wesentlichen eine geradlinige Schnittkontur aufweisen,
**dadurch gekennzeichnet,**
**dass** im Erstreckungsbereich der von einer der beiden Rillenwände (5,6) jeweils wegweisend ausgebildeten Wellenberge des wellenförmigen Verlaufes diese Rillenwand (5,6) zusätzlich mit einem kegelschnittförmigen, in die Rille hinein erstreckten Vorsprung (16,17) ausgebildet ist, wobei die Kegelspitze S auf der Rillenwand (5,6)- insbesondere in der radial äußeren Oberfläche (4) - angeordnet ist und die die Kegelachse K_{A} in der die Reifenachse und die Kegelspitze S beinhaltenden Schnittebene liegt und unter einem Neigungswinkel δ mit δ ≤ 30° zur Radialen Richtung R ausgerichtet ist, und wobei sich der kegelförmige Vorsprung (16,17) bis in einen radialen Abstand h mit h < t von der radial äußeren Oberfläche (4) erstreckt und dort endet.

2. Laufstreifenprofil gemäß den Merkmalen von Anspruch 1,
wobei der kegelschnittförmige Vorsprung (16,17) im radialen Abstand h von der radial äußeren Oberfläche (4) mit einer in Umfangsrichtung U gemessene Erstreckungslänge L₂ mit (0,4 L₁)≤ L₂≤(0,6 L₁) erstreckt ausgebildet ist.

3. Laufstreifenprofil gemäß den Merkmalen von Anspruch 1 oder 2,
wobei der kegelschnittförmige Vorsprung (16,17) in der Position im radialen Abstand h von der radial äußeren Oberfläche (4) bis in einen maximalen, in axialer Richtung A gemessenen Abstand c von der Position der Rillenwand (5,6) am Rillengrund (7) in die Rille (3) hinein erstreckt ausgebildet ist mit 0,5mm ≤c≤2,5mm.

4. Laufstreifenprofil gemäß den Merkmalen von Anspruch 1 oder 2,
wobei der kegelschnittförmige Vorsprung (16,17) in der Position im radialen Abstand h von der radial äußeren Oberfläche (4) bis in einen maximalen, in axialer Richtung A gemessenen Abstand c von der Position der Rillenwand (5,6) am Rillengrund (7) in die Rille (3) hinein erstreckt ausgebildet ist mit 0,1b ≤c≤0,4b, wobei b die in axialer Richtung A in der Position der Maxima der Wellenform des Wellenverlaufes gemessene Breite ist.

5. Laufstreifenprofil gemäß den Merkmalen von einem der vorangegangenen Ansprüche,
wobei der Abstand h mit (t-2mm)≥ h≥ (t-4mm) ausgebildet ist.

6. Laufstreifenprofil gemäß den Merkmalen von einem der vorangegangenen Ansprüche,
wobei in den die Reifenachse aufweisenden Querschnittebenen der Rillengrund (7) aus einem mittleren geradlinig erstreckten Erstreckungsabschnitt (8) der in axialer Richtung A gemessenen Erstreckungslänge a und aus einem ersten, mit Krümmungsradius rₐ nach radial außen hin gekrümmt ausgebildeten Übergangsabschnitt (10) zum Übergang zwischen geradlinig erstrecktem Erstreckungsabschnitt (8) und der zur nächstgelegenen Reifenschulter hin ausgebildeten Rillenwand (6) und aus einem zweiten, mit Krümmungsradius rᵢ nach radial außen hin gekrümmt Übergangsabschnitt (9) zum Übergang zwischen geradlinig erstrecktem Erstreckungsabschnitt (8) und der anderen Rillenwand (5) ausgebildet ist, wobei die Breite b der Rille im Rillengrund (7) mit b=(a+rᵢ+rₐ) ausgebildet ist.

7. Laufstreifenprofil gemäß den Merkmalen von Anspruch 6,
wobei rₐ und rᵢ mit rₐ > rᵢ ausgebildet sind,
wobei insbesondere rₐ und rᵢ mit 2mm ≤rₐ ≤4mm und mit rᵢ =lmm ausgebildet sind.

8. Laufstreifenprofil gemäß den Merkmalen von Anspruch 7,
wobei a mit 1mm≤a≤4mm ausgebildet ist.

9. Laufstreifenprofil gemäß den Merkmalen von Anspruch 6,
wobei der geradlinige Erstreckungsabschnitt (8) des Rillengrundes (7) in den die Reifenachse aufweisenden Querschnittebenen in axialer Richtung A ausgehend vom zweiten Übergangsabschnitt (9) bis zum ersten Übergangsabschnitt (10) unter Einschluss eines Neigungswinkels α > 0° - insbesondere mit 3° ≤ α ≤ 20° - zur axialen Richtung A radial ansteigend ausgebildet ist.

## Claims

1. Tread profile of a pneumatic vehicle tyre, in particular for commercial vehicles, having profile strips (1, 2) which are axially spaced apart from one another by a circumferential groove (3) and which are outwardly delimited in the radial direction R by a radially outer surface (4) which forms the ground contact surface, wherein the circumferential groove (3) is formed with a depth t along its extent in the circumferential direction U and is in each case delimited inwardly in the radial direction R by a groove bottom (7) and, axially on both sides of the groove bottom (7), by a respective groove wall (5, 6) which, starting from the groove bottom (7), extends in the radial direction outwardly up to the radially outer surface (4) of the profile strip (1, 2) delimited by the groove wall (5, 6), wherein the two groove walls (5, 6) in the radially outer surface (4) are oriented so as to extend parallel to one another, in particular rectilinearly, in the circumferential direction, wherein the groove bottom (7) of the circumferential groove (3) is designed to extend along its extent in the circumferential direction in a wavy shape with a wavelength L₁, wherein the two groove walls (5, 6) have substantially a rectilinear section contour along their extent in the circumferential direction in each case in the section planes which contain the tyre axis, starting from the radially outer surface (4) radially inwards in the direction of the groove bottom (7),
**characterized**
**in that**, in the region of extent of the wave crests of the wave-shaped progression that are in each case designed to point away from one of the two groove walls (5, 6), this groove wall (5, 6) is additionally formed with a conic section-shaped projection. (16, 17) which extends into the groove, wherein the cone apex S is arranged on the groove wall (5, 6), in particular in the radially outer surface (4), and the cone axis K_{A} lies in the section plane containing the tyre axis and the cone apex S and is oriented at an angle of inclination δ, where δ ≤ 30°, to the radial direction R, and wherein the conical projection (16, 17) extends as far as a radial distance h, where h < t, from the radially outer surface (4) and ends there.

2. Tread profile according to the features of Claim 1, wherein, at the radial distance h from the radially outer surface (4), the conic section-shaped projection (16, 17) is designed to extend with a length of extent L₂ measured in the circumferential direction U, where (0.4 L₁) ≤ L₂ ≤ (0.6 L₁).

3. Tread profile according to the features of Claim 1 or 2,
wherein the conical section-shaped projection (16, 17) is designed to extend into the groove (3) in the position at the radial distance h from the radially outer surface (4) as far as a maximum distance c, measured in the axial direction A, from the position of the groove wall (5, 6) at the groove bottom (7),
where 0.5 mm ≤ c ≤ 2.5 mm.

4. Tread profile according to the features of Claim 1 or 2,
wherein the conic section-shaped projection (16, 17) is designed to extend into the groove (3) in the position at the radial distance h from the radially outer surface (4) as far as a maximum distance c, measured in the axial direction A, from the position of the groove wall (5, 6) at the groove bottom (7), where 0.1b ≤ c ≤ 0.4b, where b is the width measured in the axial direction A in the position of the maxima of the wave shape of the wave progression.

5. Tread profile according to the features of one of the preceding claims,
wherein the distance h is formed with (t-2 mm) ≥ h ≥ (t-4 mm).

6. Tread profile according to the features of one of the preceding claims,
wherein, in the cross-sectional planes having the tyre axis, the groove bottom (7) is formed from a central rectilinearly extending portion of extent (8) of the length of extent a measured in the axial direction A, and from a first, radially outwardly curved transition portion (10) with radius of curvature rₐ for transition between the rectilinearly extending portion of extent (8) and the groove wall (6) formed towards the closest tyre shoulder, and from a second, radially outwardly curved transition portion (9) with radius of curvature rᵢ for transition between the rectilinearly extending portion of extent (8) and the other groove wall (5), where the width b of the groove in the groove bottom (7) is formed with b = (a + rᵢ + rₐ).

7. Tread profile according to the features of Claim 6, where rₐ and rᵢ are formed with rₐ > rᵢ,
where in particular rₐ and rᵢ are formed with 2 mm ≤ rₐ ≤ 4 mm and with rᵢ = 1 mm.

8. Tread profile according to the features of Claim 7, where a is formed with 1 mm ≤ a ≤ 4 mm.

9. Tread profile according to the features of Claim 6, wherein, in the axial direction A starting from the second transition portion (9) to the first transition portion (10), the rectilinear portion of extent (8) of the groove bottom (7) in the cross-sectional planes having the tyre axis is designed to rise radially with the inclusion of an angle of inclination α > 0°, in particular where 3° ≤ α ≤ 20°, to the axial direction A.

## Revendications

1. Profilé de bande de roulement d'un pneumatique de véhicule, en particulier de véhicules utilitaires, comprenant des bandes de profilé (1, 2) qui sont espacées axialement les unes des autres par une rainure circonférentielle (3) et qui sont délimitées dans la direction radiale R vers l'extérieur par une surface radialement extérieure (4) formant la surface de contact au sol, la rainure circonférentielle (3) étant formée le long de son extension dans la direction circonférentielle U avec une profondeur t et étant délimitée dans la direction radiale R vers l'intérieur par un fond de rainure (7) et axialement de chaque côté du fond de rainure (7) par une paroi de rainure (5, 6) qui s'étend depuis le fond de rainure (7) dans une direction radiale vers l'extérieur jusqu'à la surface radialement extérieure (4) de la bande de profilé (1, 2) délimitée par la paroi de rainure (5, 6), les deux parois de rainure (5, 6) étant orientées dans la surface radialement extérieure (4) de manière à s'étendre dans la direction circonférentielle parallèlement l'une à l'autre, en particulier de manière rectiligne, le fond de rainure (7) de la rainure circonférentielle (3) étant formé le long de son extension dans la direction circonférentielle de manière à s'étendre sous une forme ondulée avec une longueur d'onde L₁, les deux parois de rainure (5, 6) présentant chacune le long de leur extension dans la direction circonférentielle, dans les plans de coupe qui contiennent l'axe de pneumatique, sensiblement un contour de coupe rectiligne depuis la surface radialement extérieure (4) radialement vers l'intérieur en direction du fond de rainure (7),
**caractérisé en ce que**
dans la région d'extension des sommets d'ondulation de l'allure ondulée, qui sont formés de manière à pointer à l'opposé des deux parois de rainure (5, 6), cette paroi de rainure (5, 6) est formée en plus avec une saillie (16, 17) de forme conique qui s'étend jusque dans la rainure, la pointe de cône S étant disposée sur la paroi de rainure (5, 6), en particulier dans la surface radialement extérieure (4), et l'axe de cône K_{A} se trouvant dans le plan de coupe qui contient l'axe de pneumatique et la pointe de cône S et étant orienté en formant un angle d'inclinaison δ, avec δ ≤ 30°, par rapport à la direction radiale R, et la saillie conique (16, 17) s'étendant jusqu'à une distance radiale h, avec h < t, de la surface radialement extérieure (4) et se terminant à cet endroit.

2. Profilé de bande de roulement selon les caractéristiques de la revendication 1,
la saillie conique (16, 17) étant formée à une distance radiale h de la surface radialement extérieure (4) de manière à s'étendre avec une longueur d'extension L₂, avec (0,4 L₁) ≤ L₂ ≤ (0,6 L₁), mesurée dans la direction circonférentielle U.

3. Bande de roulement selon les caractéristiques de la revendication 1 ou 2, la saillie conique (16, 17) étant formée dans la position située à la distance radiale h de la surface radialement extérieure (4) de manière à s'étendre jusqu'à une distance maximale c, mesurée dans la direction axiale A, de la position de la paroi de rainure (5, 6) au niveau du fond de rainure (7) jusque dans la rainure (3), avec 0,5 mm ≤ c ≤ 2,5 mm.

4. Profilé de bande de roulement selon les caractéristiques de la revendication 1 ou 2,
la saillie conique (16, 17) étant formée à la position située à la distance radiale h de la surface radialement extérieure (4) de manière à s'étendre jusqu'à une distance maximale c, mesurée dans la direction axiale A, de la position de la paroi de rainure (5, 6) au niveau du fond de rainure (7) jusque dans la rainure (3), avec 0,1 b ≤ c ≤ 0,4 b, b étant la largeur mesurée dans la direction axiale A à la position des maxima de la forme d'onde de l'allure ondulée.

5. Profilé de bande de roulement selon les caractéristiques de l'une des revendications précédentes, la distance h étant formée avec (t-2mm) ≥ h ≥(t-4mm).

6. Profilé de bande de roulement selon les caractéristiques de l'une des revendications précédentes, le fond de rainure (7) étant formé, dans les plans de coupe transversale comportant l'axe de pneumatique, d'une partie d'extension médiane (8), s'étendant de manière rectiligne, de la longueur d'extension a mesurée dans la direction axiale A et d'une première partie de transition (10) incurvée radialement vers l'extérieur avec un rayon de courbure rₐ et destinée à la transition entre une partie d'extension (8), s'étendant de manière rectiligne, et la paroi de rainure (6) formée en direction de l'épaulement de pneumatique le plus proche et d'une deuxième partie de transition (9) incurvée radialement vers l'extérieur avec un rayon de courbure rᵢ et destinée à la transition entre la partie d'extension (8), s'étendant de manière rectiligne, et l'autre paroi de rainure (5), la largeur b de la rainure dans le fond de rainure (7) étant telle que b = (a + rᵢ + rₐ).

7. Profilé - de bande de roulement selon les caractéristiques de la revendication 6, rₐ et rᵢ étant formés avec rₐ > rᵢ, en particulier rₐ et rᵢ étant formés de telle sorte que 2 mm ≤ rₐ ≤ 4mm et rᵢ = 1 mm.

8. Profilé de bande de roulement selon les caractéristiques de la revendication 7, a étant formé de telle sorte que 1 mm ≤ a ≤ 4mm.

9. Profilé de bande de roulement selon les caractéristiques de la revendication 6, la partie d'extension rectiligne (8) du fond de rainure (7), dans les plans en coupe transversale comportant l'axe de pneumatique, étant conçue pour augmenter radialement dans la direction axiale A depuis la deuxième partie de transition (9) jusqu'à la première partie de transition. (10) en formant un angle d'inclinaison α > 0°, en particulier 3° ≤ α ≤ 20°, par rapport à la direction axiale A.
